# EUROPÄISCHE PATENTANMELDUNG

(11) **EP 1 056 180 A2**
(43) Veröffentlichungstag der Anmeldung: **29.11.2000**
(21) Anmeldenummer: 00110304.3
(22) Anmeldetag: 13.05.2000
(51) Int. Cl.: H02H 7/085, H01H 71/66

(54) **Motorschutzschalteranordnung für einen elektrischen Motor**

(30) Priorität: 27.05.1999 DE 19924413
(71) Anmelder: ABB PATENT GmbH, 68309 Mannheim (DE)
(72) Erfinder: Niewöhner, Guido, Dipl.-Ing., 69181 Leimen (DE)
(74) Vertreter: Miller, Toivo

(57) **Zusammenfassung**

Die Erfindung betrifft eine Motorschutzschalteranordnung für einen elektrischen Motor mit einem Leistungsschalter und mit einer Auswerteeinheit die im Motor gemessene Temperaturwerte auswertet und entsprechend der Auswertung den Leistungsschalter ansteuert. Dem Leistungsschalter ist ein Fernantrieb zugeordnet, der von der Auswerteelektronik angesteuert den Leistungsschalter aus- oder einschaltet.

## Beschreibung

Die Erfindung betrifft einen Motorschutzschalteranordnung nach dem Oberbegriff des Anspruches 1.

Bekannt sind Motorschutzschalter oder Leistungsschalter, die auf Überstrom und Kurzschlußstrom ansprechen und die so ausgebildet sind, daß sie dem Überlast- und Kurzschlußschutz von Motoren dienen. Solche Leistungsschalter besitzen ein Schaltschloß mit einer Verklinkungsstelle, mit dem in den Phasenleitern liegende Kontaktstelle innerhalb des Schalters bleibend geöffnet werden können. Die Ausschaltung erfolgt einerseits automatisch und andererseits ist es auch möglich, die Ausschaltung auch manuell durchzuführen. Im allgemeinen ist die Einschaltung immer manuell durchzuführen.

Bei bestimmten Motorarten ist es erforderlich, die Temperatur innerhalb der Wicklung zu überwachen. Zu diesem Zweck wird in die Wicklung ein Thermometerelement eingesetzt, dessen Ausgangssignale einer Auswerteeinheit zugeführt werden, die beispielsweise gemäß dem DE 297 13 363 U1 den Arbeitsstromauslöser ansteuert, der auf das Schaltschloß einwirkt und so den Schalter ausschaltet. Auch hier ist eine manuelle Wiedereinschaltung erforderlich.

Aufgabe der Erfindung ist es, eine Motorschutzschalteranordnung der eingangs genannten Art zu schaffen, die gegenüber den bekannten Anordnungen verbessert ist.

Diese Aufgabe wird erfindungsgemäß gelöst durch die Merkmale des Anspruches 1.

Danach ist dem Leistungsschalter ein Fernantrieb zugeordnet, der von der Ansteuerelektronik angesteuert den Leistungsschalter aus- oder einschaltet. Die Ausschaltung kann im Falle eines Ansprechens der Auswerteelektronik erfolgen und der Leistungsschalter kann mittels des Fernantriebes ereignisgesteuert wieder geschlossen werden. Dies hat den besonderen Vorteil, daß der Leistungsschalter nicht vor Ort manuell betätigt werden muß.

Da ein Abschaltkriterium bei diesem Leistungsschalter die erhöhte Temperatur im Motor ist, kann es zweckmäßig sein, dafür zu sorgen, daß der thermische Auslöser bei einem Überstrom nicht anspricht; dies kann entweder dadurch geschehen, daß der Einstellstrom des Schalters erhöht wird oder daß lediglich eine Leistungsschaltervariante ohne einen solchen thermischen Auslöser verwendet wird.

Gemäß einer weiteren Ausgestaltung der Erfindung kann auch eine Busanbindung des Fernantriebes vorgenommen werden, z. B. ein Aktuator-Sensor-Interface.

Gemäß einer weiteren Ausgestaltung der Erfindung kann der Leistungsschalter auf ein Schienenstecksystem aufgesetzt werden, das einerseits die Netzleiter und andererseits die Busanbindung enthält. Solche Schienen können beispielsweise innerhalb einer Hutprofilschiene angeordnet sein.

Anhand der Zeichnung, in der drei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1 und 2: jeweils unterschiedliche Ausgestaltungen für den Fernsteuerantrieb des Leistungsschalters, und
- Fig. 3: die Zuordnung des Leistungsschalters zu einem Steckschienensystem.

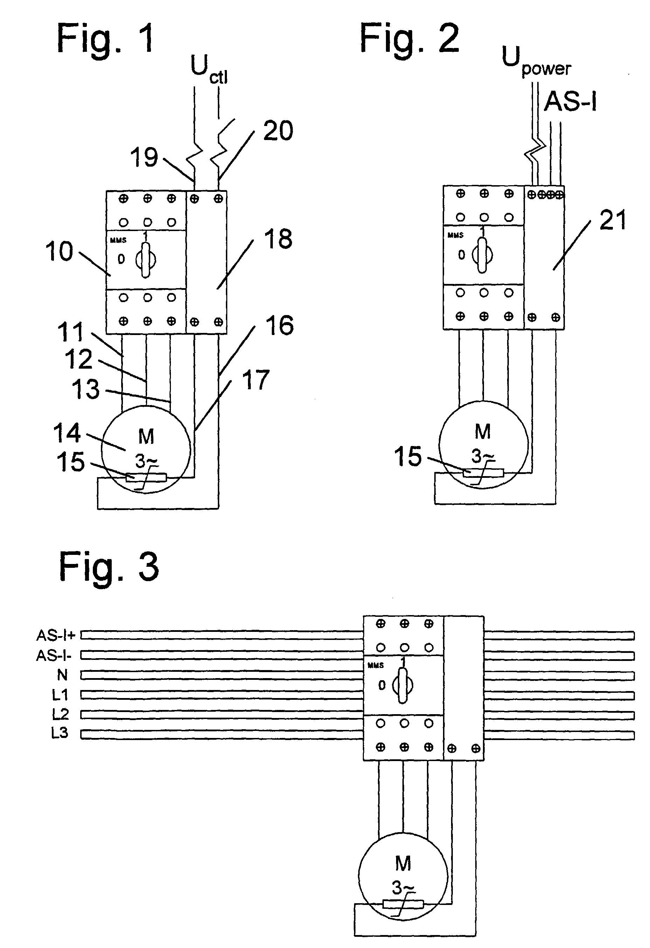

Es sein nun Bezug genommen auf die Fig. 1.

Diese zeigt einen Leistungsschalter 10, der als Motorschutzschalter dient, der an einem nicht näher dargestellten Netz angeschlossen ist und dessen Ausgangsklemmen über Leitungen 11, 12 und 13 mit einem Elektromotor 14 verbunden sind. Innerhalb der Wicklung des Elektromotors 14 sind Temperaturfühler 15 eingebaut; zur Vereinfachung ist bei der Anordnung nach Fig. 1 lediglich ein Temperaturfühler vorgesehen. Der Temperaturfühler 15 ist über Verbindungsleitungen 16 und 17 mit einem Fernantrieb 18 verbunden, der über Zuführungsleitungen 19 und 20 betätigt bzw. mit Energie versorgt wird.

Der Fernantrieb wirkt dabei in den Leistungsschalter zum Öffnen oder Schließen der Kontaktstücke (nicht dargestellt, da der Aufbau eines Motorschutzschalters allgemein bekannt ist).

Über den Fernantrieb 18 kann dann der Leistungsschalter nach einer Ausschaltung aufgrund erhöhter Temperatur in den Wicklungen wieder eingeschaltet werden.

Bei der Anordnung gemäß Fig. 2 wird der Fernantrieb 21 an eine Busanbindung angeschlossen, z. B. ein Aktuator-Sensor-Interface.

Die Anordnung nach Fig. 2 umfaßt dann einen Fernantrieb für einen Leistungsschalter, eine in den Fernantrieb 21 eingesetzte Auswerteelektronik zur Auswertung der Signale des Temperaturfühlers und die Busanbindung.

Gemäß einer weiteren Ausführungsform gemäß Fig. 3 kann ein Sammelschienenstecksystem vorgesehen sein mit den drei Phasenleitern L1, L2 und L3, dem Neutralleiter und der Busanbindung, z. B. ASI+ und ASI- beim Aktuator-Sensor-Interface. Die konstruktive Ausgestaltung der Anordnung bwz. Des Aufsteckens ist dabei an sich bekannt.

Bei den Anordnungen gemäß den Fig. 1 und 2 wird der Motorschutzschalter nebst dem Fernantrieb auf eine Hutprofiltragschiene aufgesetzt.

## Patentansprüche

1. Motorschutzschalteranordnung für einen elektrischen Motor mit einem Leistungsschalter, mit einer Auswerteeinheit, die im Motor gemessene Temperaturwerte auswertet und entsprechend der Auswertung den Leistungsschalter ansteuert, dadurch gekennzeichnet, daß dem Leistungsschalter ein Fernantrieb zugeordnet ist, der die Auswerteelektronik enthält und von der Auswerteelektronik angesteuert den Leistungsschalter aus- oder einschaltet.

2. Anordnung nach Anspruch 1, dadurch gekennzeichnet, daß der Fernantrieb und die Auswerteelektronik (21) an eine Busanbindung angekoppelt sind.

3. Anordnung nach einem der Ansprüche 1 und 2, dadurch gekennzeichnet, daß ein Steck-Sammelschienensystem vorgesehen ist, mit dem der Leistungsschalter sowie der Fernantrieb in an sich bekannter Weise gekoppelt ist.

4. Anordnung nach Anspruch 3, dadurch gekennzeichnet, daß das Sammelschienensystem neben Phasenleitern zwei oder mehr Sammelschienen für einen Feldbus aufweist.
